# FASCICULE DE BREVET EUROPEEN

(11) **EP 1 865 781 B1**
(45) Date de publication et mention de la délivrance du brevet: **17.03.2010**
(21) Numéro de dépôt: 06726181.8
(22) Date de dépôt: 04.04.2006
(51) Int. Cl.: A21C 1/02, B01F 7/16, B01F 15/06, A21C 3/04

(54) **DISPOSITIF DE MELANGE EN CONTINU D UNE PÂTE ALIMENTAIRE COMPRENANT DEUX TYPES D OUTILS DE MELANGE SUPERPOSES ET UNE EVACUATION LATERALE, PROCÉDÉ DE FABRICATION ET INSTALLATION**
GERÄT FÜR DIE KONTINUIERLICHE MISCHUNG EINES NAHRUNGSMITTELTEIGS, DAS MIT ZWEI ARTEN VON DARÜBER ANGEORDNETEN MISCHWERKZEUGEN UND EINEM SEITLICHEN AUSTRITT VERSEHEN IST, VERFAHREN UND ANLAGE
DEVICE FOR CONTINUOUSLY MIXING A FOOD DOUGH PROVIDED WITH TWO TYPES OF SUPERIMPOSED MIXING TOOLS AND A SIDE DISCHARGE, METHOD AND INSTALLATION

(30) Priorité: 05.04.2005 FR 0503360
(43) Date de publication de la demande: 19.12.2007
(73) Titulaire: VMI, 85600 Montaigu (FR)
(72) Inventeur: FISSON, Gérard, F-85600 Saint Hilaire de Loulay (FR); JAUNET, Laurent, F-85600 Saint Hilaire de Loulay (FR); RICARD, Pascal, F-85600 Treize Septiers (FR)
(74) Mandataire: Gaillarde, Frédéric F. Ch.
(86) Numéro de dépôt international: PCT/FR2006/000739
(87) Numéro de publication internationale: WO 2006/106225

(56) Documents cités:
- EP-A- 1 347 093
- DE-A1- 10 139 413
- DE-A1- 19 629 945

## Description

L'invention concerne un dispositif de mélange en continu des ingrédients d'une pâte alimentaire à base de farine et d'eau, un procédé de fabrication d'une telle pâte prévoyant de mélanger en continu les ingrédients au moyen d'un tel dispositif ainsi qu'une installation pour la mise en oeuvre d'un tel procédé.

Le dispositif de mélange selon l'invention est destiné en particulier à fraser la pâte alimentaire préalablement à son pétrissage. Un tel dispositif trouve ses applications notamment dans des installations de fabrication d'une pâte alimentaire à base de farine et d'eau de manière continue, lorsque la pâte mélangée est pétrie en continu, ou discontinue, lorsque la pâte mélangée est recueillie avant d'être pétrie.

On connaît des dispositifs de mélange comprenant une chambre de mélange des différents ingrédients, notamment l'eau et la farine, et une chambre d'évacuation en continu de la pâte mélangée dans une cuve de pétrissage. La chambre de mélange est pourvue d'un outil de mélange actionné par des premiers moyens de motorisation. Par ailleurs, un outil d'évacuation en continu s'étend entre la chambre de mélange et la chambre d'évacuation de sorte à faire avancer en continu le mélange formé dans la chambre de mélange jusqu'à une ouverture de sortie prévue sur la chambre d'évacuation. Cet outil d'évacuation est actionné par des deuxièmes moyens de motorisation distincts des premiers.

Un problème de ce type de dispositif est que sa structure est complexe du fait qu'il nécessite l'utilisation de deux moyens de motorisation distincts et de deux types d'outils distincts pour respectivement assurer le mélange et l'évacuation. En particulier, l'utilisation de ces deux types d'outils avec leur moyen de motorisation propre nécessite un agencement particulier et complexe pour éviter les interactions entre les outils et/ou avec les moyens assurant la transmission des couples de rotation entre l'outil et ses moyens de motorisation. Par ailleurs, les procédures de maintenance, et notamment de nettoyage, du dispositif de mélange ne sont pas optimales.

En outre, du fait de cette structure complexe, un tel dispositif présente un poids et un encombrement importants ce qui pose des problèmes notamment lors de l'intégration du dispositif dans une installation de fabrication de pâte alimentaire.

L'invention vise à résoudre ces problèmes en prévoyant une structure de dispositif de mélange qui permette avec seulement les outils de mélange d'assurer le mélange des ingrédients et l'évacuation de la pâte mélangée. En outre l'invention permet de faciliter les fins de production par la faiblesse des encours dans le dispositif et par vidage automatique en fin de production par arrêt de l'alimentation en entrée. Par ailleurs, l'invention propose un dispositif de mélange qui, compte tenu de sa structure, est facile à nettoyer y compris en fonctionnement automatique.

Le document DE-A-196 29 945 décrit un dispositif selon le préambule de la revendication 1.

A cet effet, et selon un premier aspect, l'invention concerne un dispositif de mélange en continu des ingrédients d'une pâte alimentaire à base de farine et d'eau, avec les caractéristiques de la revendication 1.

Ainsi, en prévoyant un mélange centrifuge de la pâte qui est combiné avec une évacuation latérale, le dispositif permet aux outils de mélange d'assurer à la fois un mélange optimal et une évacuation de la pâte mélangée. En outre, la présence de deux types d'outils de mélange superposés suivant l'axe de rotation, permet d'optimiser la qualité du mélange en fonction du temps de mélange et de la puissance consommée par les moyens de motorisation.

Selon un deuxième aspect, l'invention concerne un procédé de fabrication d'une pâte alimentaire à base de farine et d'eau selon la revendication 17, ledit procédé prévoyant de mélanger en continu les ingrédients de ladite pâte au moyen d'un dispositif de mélange selon le premier aspect, puis de pétrir ladite pâte qui est évacuée du dispositif.

Selon un troisième aspect, l'invention a pour objet une installation selon la revendication 20 pour la mise en oeuvre d'un tel procédé, comprenant un dispositif de mélange selon le premier aspect, et une cuve de pétrissage dans laquelle sont disposés des outils de pétrissage, ladite cuve comprenant un orifice amont d'alimentation du mélange à pétrir qui est en communication avec, ou disposé en regard de, l'orifice d'évacuation, et un orifice aval de sortie de la pâte pétrie, ladite cuve étant agencée pour, lors de l'alimentation en continu de la cuve avec le mélange évacuée du dispositif de mélange, permettre le déplacement de la pâte dans la cuve depuis l'orifice amont vers l'orifice aval.

D'autres objets et avantages de l'invention apparaîtront au cours de la description qui suit, faite en référence aux dessins annexés dans lesquels :

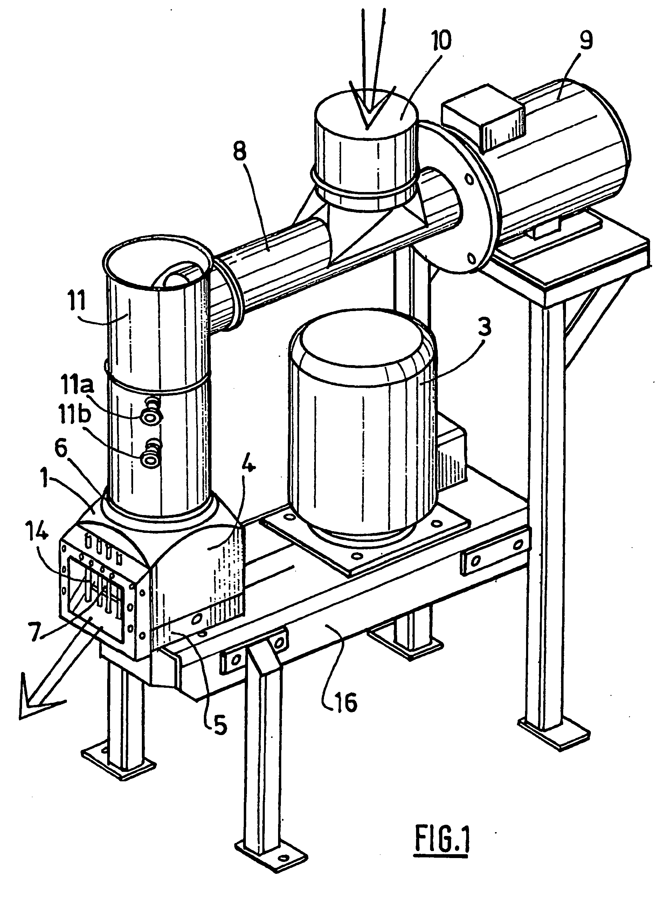

- la figure 1 est une vue en perspective d'un dispositif de mélange selon un mode de réalisation ;
- la figure 2 est une vue partielle de côté du dispositif de mélange de la figure 1 sur laquelle le manchon et la cloche ne sont pas représentés de sorte à voir le cône plein d'alimentation en eau et la disposition des outils de mélange.
- les figures 3 sont des représentations des bras supérieurs ou inférieurs de l'outil de mélange inférieur représenté sur la figure 1 ;
- la figure 4 est une représentation schématique d'une installation de fabrication en continu d'une pâte alimentaire à base de farine et d'eau comprenant un dispositif de mélange selon la figure 1.

Sur les figures, on représente un dispositif de mélange en continu des ingrédients d'une pâte alimentaire à base de farine et d'eau.

Le terme pâte alimentaire à base de farine et d'eau peut désigner tout mélange comprenant de l'eau et de la farine dans des proportions adaptées au type de pâte alimentaire souhaitée. Celle-ci peut être plus ou moins fluide, plus ou moins visqueuse. En particulier, le terme pâte alimentaire peut désigner le levain liquide.

Le dispositif permet en particulier de fraser la pâte préalablement à son pétrissage. Toutefois, compte tenu de la qualité du mélange obtenu avec le dispositif suivant l'invention, la pâte mélangée peut, dans certaines applications, être utilisée sans pétrissage ultérieur.

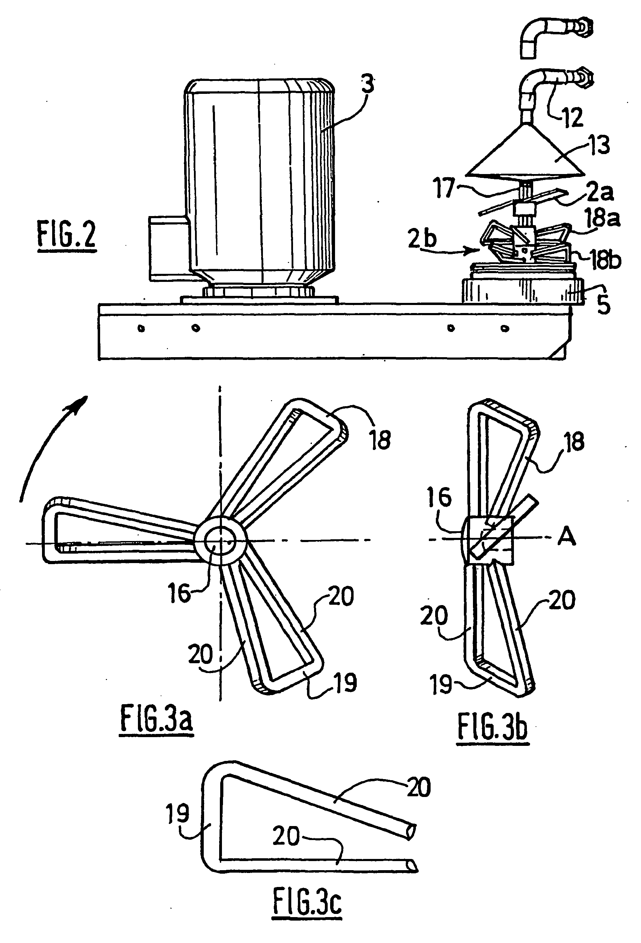

Le dispositif comprend une enceint de mélange 1 à l'intérieure de laquelle deux outils de mélange 2a, 2b sont montés en rotation l'un au dessus de l'autre autour d'un axe de rotation A. Le dispositif comprend également des moyens de motorisation 3 pour entraîner les outils 2a, 2b en rotation selon un sens de mélange matérialisé sur la figure 3a par une flèche orientée dans le sens horaire.

Dans la suite de la description, les termes « axial » ou « longitudinal » et « radial » ou « transversal » font référence à des plans respectivement parallèle et perpendiculaire à l'axe A.

L'enceinte de mélange 1 définie un espace de mélange présentant une section transversale circulaire d'axe A. L'enceinte 1 comprend une cloche 4 qui est associée de façon étanche sur un support 5 de forme générale plane de sort à définir l'espace de mélange dans lequel sont disposés les outils de mélange 2a, 2b.

L'enceinte 1 peut intégrer des dispositifs utilisés dans la préparation d'une pâte alimentaire à base de farine et d'eau. De tels dispositifs permettent, par exemple, de contrôler les conditions dans lesquelles les ingrédients sont mélangés. Il peut s'agir notamment d'un dispositif de refroidissement. L'enceinte 1 comprend alors une chambre de circulation d'un fluide de refroidissement, tel que du glycol, entre un port amont et un port aval prévus sur la périphérie de la cloche 4.

En variante éventuellement complémentaire, l'enceinte 1 peut intégrer un dispositif de chauffage et comprendre plusieurs chambres de circulation entre des ports amont et aval.

Les ingrédients introduits dans l'espace de mélange sont mélangés par les outils de mélange 2a, 2b entre un orifice d'alimentation 6 de l'espace en ingrédients qui est prévu dans l'enceinte 1 de façon sensiblement coaxiale à l'axe de rotation A et un orifice d'évacuation 7 de la pâte mélangée.

Le dispositif de mélange comprend un outil supérieur 2a qui est formé d'une hélice s'étendant sensiblement perpendiculaire à l'axe de rotation A de sorte à assurer un pré mélange des ingrédients.

Le dispositif de mélange comprend également un outil inférieur 2b comprenant au moins un bras radial 18 présentant une surface d'attaque inclinée par rapport à l'axe de rotation A, l'enceinte 1 étant pourvue de l'orifice d'évacuation 7 de la pâte mélangée qui est situé dans la partie latérale de la périphérie de l'espace de mélange et en regard de l'outil inférieur 2b.

L'hélice 2a représentée comprend deux aubes pleines montées sur un moyeu de sorte, en coupant l'alimentation en ingrédients lors de leur chute au travers de l'orifice d'alimentation 6, à assurer un pré mélange préalablement à la mise en contact entre les ingrédients et l'outil inférieur 2b.

Dans le mode de réalisation représenté, l'outil inférieur 2b comprend des bras supérieurs 18a et des bras inférieurs 18b qui sont espacés suivant l'axe de rotation A. Plus particulièrement l'outil inférieur 2b comprend deux moyeux 16 d'association à un arbre moteur 17 et trois bras 18 s'étendant radialement depuis chaque moyeu 16. Chaque bras 18 est incliné, par rapport au sens de rotation de l'outil inférieur 2b, vers l'avant de sorte à présenter une surface d'attaque de la pâte dont la normale est orientée vers le fond de l'espace de mélange.

Les trois bras 18 sont identiques et équirépartis autour du moyeu 16 avec un écart angulaire égal à 120°. Cette disposition offre l'avantage de présenter une meilleure stabilité lors de la rotation de l'outil inférieur 2b.

Chaque bras 18 comprend un tube en forme de U et de section polygonale, notamment carrée ou triangulaire, ou circulaire (figure 3c). La base 19 du U est disposée de sorte que les branches 20 soient disposées l'une au dessus de l'autre et forment la surface d'attaque de la pâte. Les deux branches 20 du U sont associées au moyeu 16 de sorte que la branche 20 supérieure soit disposée, par rapport au sens de rotation, devant la branche 20 inférieure (figure 3b). Par exemple, l'angle entre la normale de la surface d'attaque et l'axe de rotation A est de l'ordre de 45°.

Par ailleurs, la longueur de chaque bras 18 est analogue à celle des aubes de l'hélice 2a et peut être relativement limitée du fait de la présence de bras supérieurs 18a et inférieurs 18b . L'outil inférieur 2b est disposé en regard et à distance de la surface supérieure du support 5 de sorte que la distance entre l'extrémité inférieure du bras 18 et le support 9 soit faible.

Ainsi, dans cette réalisation particulière, lors de la rotation de l'outil 2a, 2b, le travail de la pâte alimentaire combine du cisaillement, du roulement sur le bord de l'espace de mélange, du plaquage sur la surface supérieure du support 5 et de la centrifugation.

Toutefois, les choix du nombre de bras 18, de leur forme et de l'inclinaison de la surface d'attaque permettent d'adapter le dispositif au type de pâte mélangée souhaité.

Pour assurer la rotation de l'outil de mélange 2a, 2b, les moyens de motorisation 3 peuvent comprendre un ou plusieurs moteurs entraînant en rotation l'arbre moteur 17 auquel les outils de mélange 2a, 2b sont associés. On peut, par ailleurs, prévoir que les moyens de motorisation 3 disposent de régulateurs permettant d'adapter la vitesse de rotation, par exemple, au type de mélange ou au débit de sortie souhaité. Dans un exemple particulier, les moyens de motorisation 3 comprennent un moteur d'une puissance de 3 kW. La durée durant laquelle la pâte est mélangée en circuit fermé par l'outil 2a, 2b est alors comprise entre une et cinq seconde suivant le débit d'évacuation de pâte mélangée et son hygrométrie.

Du fait de l'utilisation combinée des deux types d'outils qui sont disposés suivant l'invention, le travail de la pâte alimentaire obtenu permet d'obtenir une bonne qualité de mélange (pâte bien liée, homogénéisation aboutie) en réalisant un premier pétrissage de la pâte mélangée avant même son introduction dans une cuve de pétrissage, et ce pour un temps de mélange très court et une puissance consommée faible (typiquement 10kW nécessaire pour les dispositifs de mélange selon l'art antérieur).

En amont du dispositif de mélange, préalablement à leur introduction dans l'espace de mélange, les ingrédients à mélanger pour obtenir le type de pâte alimentaire souhaité sont dosés selon les proportions requises, par exemple en pondéral pour les ingrédients solides (notamment sous la forme de poudre) et en volumétrique pour les ingrédients liquides. Ces ingrédients comprennent notamment de la farine, de l'eau et d'autres éléments utilisés en boulangerie, par exemple de l'huile, du levain ou des améliorants tel que l'acide ascorbique. D'autres types d'ingrédients solides n'entrant pas directement dans la composition de la pâte alimentaire proprement dite peuvent également être mélangé, tels que du chocolat, en pépites ou fondu, des fruits secs, etc.

L'acheminement en continu vers le dispositif de mélange des ingrédients est réalisé par des moyens d'amenée et d'alimentation en continu. Comme représenté, les moyens d'amenée des ingrédients solides peuvent se présenter sous la forme d'un conduit 8 de section sensiblement circulaire réalisé en matériau flexible ou rigide ou une combinaison des deux, dans lequel une vis actionnée par un moteur 9 amène les ingrédients solides depuis un orifice d'introduction 10 vers l'orifice d'alimentation 6.

Dans le mode de réalisation représenté, l'orifice d'alimentation 6 est surmonté d'un manchon 11 en communication avec le conduit 8, de sorte à introduire par gravité les ingrédients solides et liquides dans l'espace de mélange au travers dudit orifice d'alimentation. Le manchon 11 est coaxial à l'axe de rotation A, sensiblement cylindrique et de rayon sensiblement égal à celui de l'orifice d'alimentation 6 et à celui de la section transversale circulaire de l'espace de mélange.

En outre, la périphérie du manchon 11 comprend deux orifices 11a, 11b d'alimentation en ingrédients liquides, respectivement un inférieur d'alimentation en eau et un supérieur d'alimentation en améliorants liquidés, l'alimentation en ingrédients solides étant réalisée en partie supérieure du manchon 11. Selon d'autres modes de réalisation, un ou plus de deux orifices d'alimentation en liquide peuvent être prévus sur le manchon, ou encore directement sur l'enceinte 1.

Pour assurer un mouillage satisfaisant et homogène de l'ensemble des ingrédients solides présents dans le manchon 11 puis dans l'espace de mélange, au moins l'orifice d'alimentation en eau 11b est pourvu d'une buse 12 agencée pour permettre l'introduction du liquide selon un cône 13 sensiblement plein. Les liquides sont injectés en fines gouttelettes à basse pression de sorte à former un brouillard permettant le mouillage sensiblement instantané des ingrédients solides. En particulier, la buse 12 comprend un tuyau coudé au voisinage du centre du manchon 11, ledit coude étant orienté vers le bas de sorte que le cône 12 soit coaxial à l'axe de rotation A et dirigé vers le bas. Selon la réalisation représentée, les géométries du cône plein 12, du manchon 11 et de l'orifice d'alimentation 6 sont adaptées au diamètre de l'espace de mélange afin de mouiller les ingrédients en chute libre de manière homogène, lesdits ingrédients tombant ensuite sur toutes l'étendue des outils 2a, 2b pour être pré mélangés par l'hélice 2a et mélangés par l'outil inférieur 2b.

L'évacuation de la pâte mélangée est réalisée par l'orifice d'évacuation 7 d'une part par l'effet centrifuge dû à la rotation des outils 2a, 2b et d'autre part par cisaillement contre les bords de l'espace de mélange. L'orifice d'évacuation 7 est d'axe perpendiculaire à l'axe de rotation de sorte à assurer une évacuation radiale de la pâte mélangée.

Selon le mode de réalisation représenté, l'orifice d'évacuation 7 est pourvu d'une herse 14 de régulation du débit d'écoulement de pâte mélangée. En particulier, cette réalisation permet de contrôler le temps de séjour de la pâte dans l'espace de mélange.

Afin de faciliter la maintenance et le nettoyage de l'enceinte 1 ou de contrôler l'alimentation en ingrédients et l'évacuation de la pâte mélangée, on peut prévoir que les orifices d'alimentation 6 et/ou d'évacuation 7 soient pourvus d'une vanne d'isolation non représentée, et notamment d'une vanne à manchon pour l'orifice d'alimentation 6 et d'une vanne guillotine pour l'orifice d'évacuation 7.

Le dispositif de mélange tel qu'il vient d'être décrit peut indifféremment être utilisé dans une installation de fabrication de manière discontinue ou continue d'une pâte alimentaire à base de farine et d'eau.

Pour une installation dans laquelle la pâte alimentaire à base de farine et d'eau est fabriquée de manière discontinue, on met en oeuvre un procédé dans lequel les ingrédients de la pâte alimentaire sont mélangés en continu dans le dispositif de mélange, la pâte mélangée évacuée du dispositif est ensuite recueillie avant d'être pétrie dans une cuve de pétrissage.

Pour une installation dans laquelle la pâte alimentaire à base de farine et d'eau est fabriquée de manière continue, on met en oeuvre un procédé dans lequel les ingrédients de la pâte alimentaire sont mélangés en continu dans le dispositif de mélange, la pâte mélangée évacuée du dispositif est pétrie en continu dans une cuve de pétrissage.

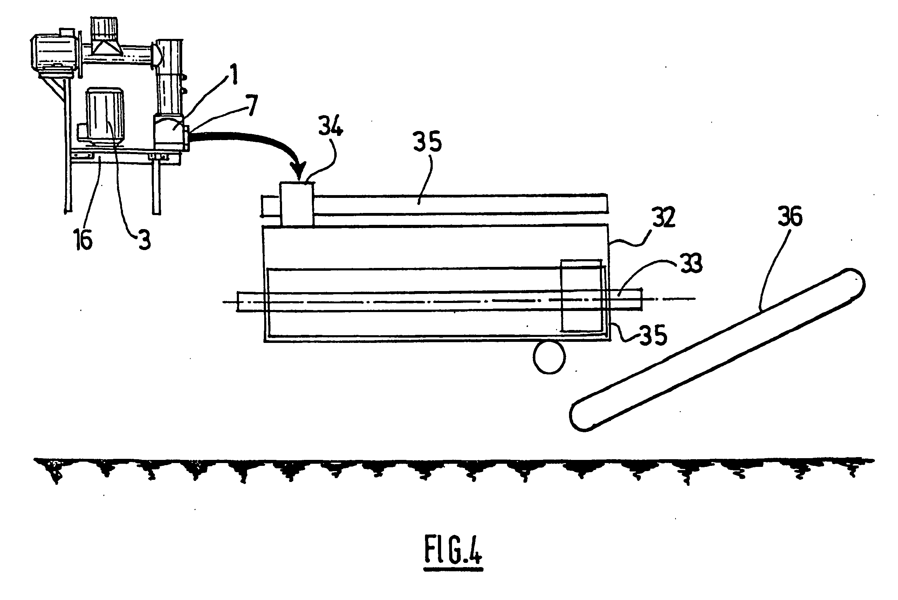

Pour ce faire, cette dernière installation, représentée sur la figure 4, comprend le dispositif de mélange et une cuve de pétrissage 32 dans laquelle sont disposés des outils de pétrissage 33 au voisinage du fond de la cuve. Le dispositif de mélange est monté sur un châssis 16 et la cuve de pétrissage 32 également (non représenté).

La cuve 32 comprend une première et une deuxième parois latérales sensiblement verticales reliées par le fond de la cuve. L'ouverture de la cuve 32 peut être recouverte par un couvercle 35 monté de manière amovible sur la cuve 32. La cuve 32 comprend, sur sa partie supérieure, un orifice amont 34 d'alimentation de la pâte mélangée à pétrir. L'orifice amont 34 est en communication avec l'orifice d'évacuation 7 du dispositif de mélange, par exemple au moyen de deuxièmes moyens d'amenée pouvant se présenter sous la forme de conduits de section sensiblement circulaire ou rectangulaire réalisés en matériau flexible ou rigide ou une combinaison des deux. On peut également prévoir que l'orifice amont 34 de la cuve 32 soit disposé en regard de l'orifice d'évacuation 7.

La cuve 32 est agencée pour, lors de l'alimentation en continu de la cuve 32 avec la pâte mélangée issue du dispositif de mélange, permettre le déplacement de la pâte mélangée dans la cuve 32 depuis l'orifice amont 34 et un orifice aval 35 de sortie de la pâte pétrie. L'orifice aval 35 est situé sur une face latérale de la cuve 32 et placé à une distance prédéterminée d'un dispositif de récupération 36, tel qu'un tapis sans fin, de la pâte pétrie en sortie de la cuve 32.

## Revendications

1. Dispositif de mélange en continu des ingrédients d'une pâte alimentaire à base de farine et d'eau, ledit dispositif comprenant une enceinte (1) définissant un espace de mélange présentant une section transversale circulaire, dans lequel au moins deux outils de mélange (2a, 2b) sont montés en rotation l'un au dessus de l'autre autour d'un axe de rotation (A) et des moyens de motorisation (3) entraînant en rotation lesdits outils, ladite enceinte comprenant un orifice supérieur d'alimentation (6) de l'espace en ingrédients qui est sensiblement coaxial à l'axe de rotation (A), l'outil supérieur (2a) étant formé d'une hélice s'étendant sensiblement perpendiculairement à l'axe de rotation (A) de sorte à assurer un pré mélange des ingrédients, l'outil inférieur (2b) comprenant au moins un bras radial (18) présentant une surface d'attaque inclinée par rapport à l'axe de rotation (A), l'enceinte (1) étant pourvue d'un orifice d'évacuation (7) de la pâte mélangée qui est situé dans la partie latérale de la périphérie de l'espace de mélange et en regard de l'outil inférieur (2b). ledit dispositif étant **caractérisé en ce que** l'orifice d'alimentation (6) est surmonté d'un manchon (11) dans lequel les ingrédients solides et liquides sont introduits pour tomber par gravité dans l'espace de mélange au travers dudit orifice d'alimentation. la périphérie du manchon (11) comprenant au moins un orifice d'alimentation (11a, 11b) en ingrédients liquides, l'alimentation en ingrédients solides étant réalisée en partie supérieure du manchon (11).

2. Dispositif de mélange selon la revendication 1, **caractérisé en ce que** le manchon (11) est coaxial à l'axe de rotation (A).

3. Dispositif de mélange selon la revendication 2, **caractérisé en ce que** le manchon (11) est sensiblement cylindrique, de rayon sensiblement égal à celui de l'orifice d'alimentation (6) et à celui de la section transversale circulaire de l'espace de mélange.

4. Dispositif de mélange selon l'une des revendications 1 à 3, **caractérisé en ce que** l'orifice d'alimentation (11a, 11b) en liquide est pourvu d'une buse (12) qui est agencée pour permettre l'introduction du liquide dans l'espace de mélange selon un cône (13) sensiblement plein.

5. Dispositif de mélange selon la revendication 4, **caractérisé en ce que** la buse (12) est disposée dans le manchon (11) de sorte que le cône soit coaxial à l'axe de rotation (A) et dirigé vers le bas.

6. Dispositif de mélange selon l'une quelconque des revendications 1 à 5, **caractérisé en ce que** l'orifice d'évacuation (7) est pourvu d'une herse (14) de régulation du débit d'écoulement de la pâte mélangée.

7. Dispositif de mélange selon l'une quelconque des revendications 1 à 6, **caractérisé en ce que** l'orifice d'évacuation (7) est d'axe perpendiculaire à l'axe de rotation (A) de sorte à assurer une évacuation radiale de la pâte mélangée.

8. Dispositif de mélange selon l'une quelconque des revendications 1 à 7, **caractérisé en ce que** l'enceinte (1) comprend une cloche (4) qui est associée de façon étanche sur un support (5), l'orifice d'évacuation (7) étant réalisé dans la paroi latérale de la cloche.

9. Dispositif de mélange selon la revendication 8, **caractérisé en ce que** le support (5) présente une surface supérieure qui est sensiblement plane, en regard et à distance de laquelle l'outil inférieur (2b) est disposé.

10. Dispositif de mélange selon l'une quelconque des revendications 1 à 9. **caractérisé en ce que** les bras (18) sont inclinés, par rapport au sens de rotation de l'outil inférieur (2b), vers l'avant de sorte à présenter une surface d'attaque de la pâte dont la normale est orientée vers le fond de l'espace de mélange.

11. Dispositif de mélange selon la revendication 10, **caractérisé en ce que** l'angle entre la normale de la surface d'attaque et l'axe de rotation (A) est de l'ordre de 45°.

12. Dispositif de mélange selon l'une quelconque des revendications 1 à 11, **caractérisé en ce que** l'outil inférieur (2b) comprend des bras supérieurs (18a) et des bras inférieurs (18b) qui sont espacés suivant l'axe de rotation (A).

13. Dispositif de mélange selon la revendication 12, **caractérisé en ce que** l'outil inférieur (2b) comprend deux moyeux (16) d'association au moteur qui sont superposés coaxialement, trois bras (18) identiques s'étendant radialement depuis chacun des moyeux, les bras (18) étant équirépartis autour du moyeu (16) avec un écart angulaire égal à 120°.

14. Dispositif de mélange selon la revendication 13, **caractérise en ce que** chaque bras (18) comprend un tube en forme de U, les deux branches (20) du U étant associées au moyeu (16) de sorte que la branche (20) supérieure du U soit disposée, par rapport au sens de rotation de l'outil inférieur, devant la branche (20) inférieure du U, la surface d'attaque de la pâte étant formée entre lesdites branches.

15. Dispositif de mélange selon l'une quelconque des revendications 1 à 14, **caractérisé en ce que** l'enceinte (1) comprend au moins une chambre de circulation d'un fluide entre un port amont et un port aval prévus sur la paroi extérieure de ladite enceinte.

16. Dispositif de mélange selon l'une quelconque des revendications 1 à 15, **caractérisé en ce que** l'orifice d'alimentation (6) et/ou d'évacuation (7) est pourvu d'une vanne.

17. Procédé de fabrication d'une pâte alimentaire à base de farine et d'eau, ledit procédé prévoyant de mélanger en continu les ingrédients de ladite pâte au moyen d'un dispositif de mélange selon l'une quelconque des revendications 1 à 16, puis de pétrir ladite pâte qui est évacuée du dispositif.

18. Procédé de fabrication selon la revendication 17, **caractérisé en ce que** la pâte évacuée du dispositif de mélange est recueillie préalablement à son pétrissage.

19. Procédé de fabrication selon la revendication 18, **caractérisé en ce que** la pâte évacuée du dispositif de mélange est pétrie en continu.

20. Installation pour la mise en oeuvre du procédé selon la revendication 19, comprenant un dispositif de mélange selon l'une quelconque des revendications 1 à 16, et une cuve de pétrissage (32) dans laquelle sont disposés des outils de pétrissage (33), ladite cuve comprenant un orifice amont (34) d'alimentation du mélange à pétrir qui est en communication avec, ou disposé en regard de, l'orifice d'évacuation (7), et un orifice aval (35) de sortie de la pâte pétrie, ladite cuve étant agencée pour, lors de l'alimentation en continu de la cuve (32) avec le mélange évacuée du dispositif de mélange, permettre le déplacement de la pâte dans la cuve (32) depuis l'orifice amont (34) vers l'orifice aval (35).

21. Installation selon la revendication 20, **caractérisée en ce que** l'orifice d'alimentation (34) est prévu sur la partie supérieure de la cuve (32), l'orifice de sortie (35) étant situé sur une face latérale de ladite cuve.

## Claims

1. Device for continuous mixing of the ingredients of a flour- and water-based food dough, the said device comprising an enclosure (1) defining a mixing space having a circular cross section, in which at least two mixing tools (2a, 2b) are mounted so as to rotate one above the other about an axis of rotation (A) and motorization means (3) rotating the said tools, the said enclosure comprising a top orifice (6) for supplying the space with ingredients that is substantially coaxial with the axis of rotation (A), the upper tool (2a) taking the form of an impeller extending substantially perpendicularly to the axis of rotation (A) so as to provide a pre-mixing of the ingredients, the lower tool (2b) comprising at least one radial arm (18) having a leading surface inclined relative to the axis of rotation (A), the enclosure (1) being provided with an orifice (7) for discharging the mixed dough which is situated in the lateral portion of the periphery of the mixing space and opposite to the lower tool (2b), the said device being **characterized in that** the feed orifice (6) is surmounted by a sleeve (11) into which the solid and liquid ingredients are inserted in order to fall by gravity into the mixing space through the said feed orifice, the periphery of the sleeve (11) comprising at least one orifice (11a, 11b) for feeding with liquid ingredients, the feeding with solid ingredients being carried out in the upper portion of the sleeve (11).

2. Mixing device according to Claim 1, **characterized in that** the sleeve (11) is coaxial with the axis of rotation (A).

3. Mixing device according to Claim 2, **characterized in that** the sleeve (11) is substantially cylindrical, with a radius substantially equal to that of the feed orifice (6) and to that of the circular cross section of the mixing space.

4. Mixing device according to one of Claims 1 to 3, **characterized in that** the liquid feed orifice (11a, 11b) is provided with a pipe (12) which is arranged to allow the insertion of the liquid into the mixing space along a substantially solid cone (13).

5. Mixing device according to Claim 4, **characterized in that** the pipe (12) is placed in the sleeve (11) so that the cone is coaxial with the axis of rotation (A) and directed downwards.

6. Mixing device according to any one of Claims 1 to 5, **characterized in that** the discharge orifice (7) is provided with a grid (14) for regulating the flow rate of the mixed dough.

7. Mixing device according to any one of Claims 1 to 6, **characterized in that** the discharge orifice (7) has an axis perpendicular to the axis of rotation (A) so as to ensure a radial discharge of the mixed dough.

8. Mixing device according to any one of Claims 1 to 7, **characterized in that** the enclosure (1) comprises a cloche (4) which is connected in a sealed manner to a support (5), the discharge orifice (7) being made in the side wall of the cloche.

9. Mixing device according to Claim 8, **characterized in that** the support (5) has an upper surface which is substantially flat, facing which and at a distance from which the lower tool (2b) is placed.

10. Mixing device according to any one of Claims 1 to 9, **characterized in that** the arms (18) are inclined, relative to the direction of rotation of the lower tool (2b), towards the front so as to present a leading surface of the dough the line perpendicular to which is oriented towards the bottom of the mixing space.

11. Mixing device according to Claim 10, **characterized in that** the angle between the line perpendicular to the leading surface and the axis of rotation (A) is of the order of 45°.

12. Mixing device according to any one of Claims 1 to 11, **characterized in that** the lower tool (2b) comprises upper arms (18a) and lower arms (18b) that are spaced along the axis of rotation (A).

13. Mixing device according to Claim 12, **characterized in that** the lower tool (2b) comprises two hubs (16) for linking to the motor which are superposed coaxially, three identical arms (18) extending radially from each of the hubs, the arms (18) being equally distributed about the hub (16) with an angular separation equal to 120°.

14. Mixing device according to Claim 13, **characterized in that** each arm (18) comprises a U-shaped tube, the two branches (20) of the U being connected to the hub (16) so that the upper branch (20) of the U is placed, relative to the direction of rotation of the lower tool, in front of the lower branch (20) of the U, the leading surface of the dough being formed between the said branches.

15. Mixing device according to any one of Claims 1 to 14, **characterized in that** the enclosure (1) comprises at least one chamber for the travel of a fluid between an upstream port and a downstream port provided on the outer wall of the said enclosure.

16. Mixing device according to any one of Claims 1 to 15, **characterized in that** the feed orifice (6) and/or the discharge orifice (7) is provided with a valve.

17. Method for producing a flour- and water-based food dough, the said method providing for the continuous mixing of the ingredients of the said dough by means of a mixing device according to any one of Claims 1 to 16, and then to knead the said dough which is discharged from the device.

18. Making method according to Claim 17, **characterized in that** the dough discharged from the mixing device is collected prior to being kneaded.

19. Method for making according to Claim 18, **characterized in that** the dough discharged from the mixing device is continuously kneaded.

20. Installation for applying the method according to Claim 19, comprising a mixing device according to any one of Claims 1 to 16, and a kneading basin (32) in which kneading tools (33) are placed, the said basin comprising an upstream orifice (34) for the feeding of the mixture to be kneaded which is in communication with, or placed opposite to, the discharge orifice (7), and a downstream orifice (35) for the exit of the kneaded dough, the said basin being arranged in order, during the continuous feeding of the basin (32) with the mixture discharged from the mixing device, to allow the movement of the dough into the basin (32) from the upstream orifice (34) to the downstream orifice (35).

21. Installation according to Claim 20, **characterized in that** the feed orifice (34) is provided over the upper portion of the basin (32), the outlet orifice (35) being situated on a lateral face of the said basin.

## Patentansprüche

1. Vorrichtung zum kontinuierlichen Mischen der Zutaten eines Nahrungsmittelteigs auf der Grundlage von Mehl und Wasser, wobei die Vorrichtung eine Einfassung (1), die einen Mischraum mit einem kreisförmigen Querschnitt definiert, in dem mindestens zwei Mischwerkzeuge (2a, 2b) übereinander um eine Rotationsachse (A) drehbar montiert sind, und Antriebsmittel (3) zum Drehantrieb der Werkzeuge umfasst, wobei die Einfassung eine obere Öffnung (6) zur Speisung des Raums mit Zutaten umfasst, die im Wesentlichen koaxial zur Rotationsachse (A) ist, wobei das obere Werkzeug (2a) schraubenförmig ausgebildet ist und sich im Wesentlichen senkrecht zur Rotationsachse (A) erstreckt, um für eine Vormischung der Zutaten zu sorgen, und das untere Werkzeug (2b) mindestens einen radialen Arm (18) umfasst, der eine zur Rotationsachse (A) geneigte Angriffsfläche aufweist, wobei die Einfassung (1) mit einer Öffnung (7) zum Abführen des gemischten Teigs versehen ist, die im seitlichen Teil des Umfangs des Mischraums und gegenüber dem unteren Werkzeug (2b) angeordnet ist, **dadurch gekennzeichnet, dass** über der Speiseöffnung (6) eine Hülse (11) angeordnet ist, in die die festen und flüssigen Zutaten eingeführt werden und unter Schwerkraftwirkung durch die Speiseöffnung in den Mischraum fallen, wobei der Umfang der Hülse (11) mindestens eine Öffnung (11a, 11b) zur Speisung mit flüssigen Zutaten umfasst, wobei die Speisung mit festen Zutaten im oberen Teil der Hülse (11) erfolgt.

2. Mischvorrichtung nach Anspruch 1, **dadurch gekennzeichnet, dass** die Hülse (11) zur Rotationsachse (A) koaxial ist.

3. Mischvorrichtung nach Anspruch 2, **dadurch gekennzeichnet, dass** die Hülse (11) im Wesentlichen zylindrisch ist und ihr Radius im Wesentlichen dem der Speiseöffnung (6) und dem des kreisförmigen Querschnitts des Mischraums entspricht.

4. Mischvorrichtung nach einem der Ansprüche 1 bis 3, **dadurch gekennzeichnet, dass** die Öffnung (11a, 11b) zur Speisung mit Flüssigkeit mit einem Stutzen (12) versehen ist, der so ausgeführt ist, dass er das Einführen der Flüssigkeit in den Mischraum im Wesentlichen in einem Vollkegel (13) gestattet.

5. Mischvorrichtung nach Anspruch 4, **dadurch gekennzeichnet, dass** der Stutzen (12) so in der Hülse (11) angeordnet ist, dass der Kegel zur Rotationsachse (A) koaxial und nach unten gerichtet ist.

6. Mischvorrichtung nach einem der Ansprüche 1 bis 5, **dadurch gekennzeichnet, dass** die Abführöffnung (7) mit einem Gitter (14) zur Regulierung der Durchflussrate des gemischten Teigs versehen ist.

7. Mischvorrichtung nach einem der Ansprüche 1 bis 6, **dadurch gekennzeichnet, dass** die Abführöffnung (7) eine Achse hat, die senkrecht zur Rotationsachse (A) verläuft, um für ein radiales Abführen des gemischten Teigs zu sorgen.

8. Mischvorrichtung nach einem der Ansprüche 1 bis 7, **dadurch gekennzeichnet, dass** die Einfassung (1) eine Haube (4) umfasst, die dicht mit einer Stütze (5) verbunden ist, wobei die Abführöffnung (7) in der Seitenwand der Haube ausgeführt ist.

9. Mischvorrichtung nach Anspruch 8, **dadurch gekennzeichnet, dass** die Stütze (5) eine obere Fläche aufweist, die im Wesentlichen eben ist und deren gegenüber das untere Werkzeug (2b) in einem Abstand angeordnet ist.

10. Mischvorrichtung nach einem der Ansprüche 1 bis 9, **dadurch gekennzeichnet, dass** die Arme (18) bezüglich der Drehrichtung des unteren Werkzeugs (2b) so nach vorne geneigt sind, dass sie eine Teigangriffsfläche aufweisen, deren Normale zum Boden des Mischraums ausgerichtet ist.

11. Mischvorrichtung nach Anspruch 12, **dadurch gekennzeichnet, dass** der Winkel zwischen der Normalen der Angriffsfläche und der Rotationsachse (A) ungefähr 45° beträgt.

12. Mischvorrichtung nach einem der Ansprüche 1 bis 11, **dadurch gekennzeichnet, dass** das untere Werkzeug (2b) obere Arme (18a) und untere Arme (18b) umfasst, die gemäß der Rotationsachse (A) beabstandet sind.

13. Mischvorrichtung nach Anspruch 12, **dadurch gekennzeichnet, dass** das untere Werkzeug (2b) zwei Naben (16) zur Verbindung mit dem Motor umfasst, die koaxial übereinanderliegen, wobei sich drei identische Arme (18) radial von jeder der Naben erstrecken und mit einem Winkelabstand gleich 120° gleichmäßig um die Nabe (16) herum verteilt sind.

14. Mischvorrichtung nach Anspruch 13, **dadurch gekennzeichnet, dass** jeder Arm (18) ein U-förmiges Rohr umfasst, wobei die beiden Zweige (20) des U der Nabe (16) zugeordnet sind, so dass der obere Zweig (20) des U bezüglich der Drehrichtung des unteren Werkzeugs vor dem unteren Zweig (20) des U angeordnet ist, wobei die Teigangriffsfläche zwischen den Zweigen ausgebildet ist.

15. Mischvorrichtung nach einem der Ansprüche 1 bis 14, **dadurch gekennzeichnet, dass** die Einfassung (1) mindestens eine Kammer umfasst, in der ein Fluid zwischen einem stromaufwärtigen und einem stromabwärtigen Anschluss, die an der äußeren Wand der Einfassung vorgesehen sind, umlaufen kann.

16. Mischvorrichtung nach einem der Ansprüche 1 bis 15, **dadurch gekennzeichnet, dass** die Speise- (6) und/oder Abführöffnung (7) mit einem Ventil versehen sind.

17. Verfahren zur Herstellung eines Nahrungsmittelteigs auf der Grundlage von Mehl und Wasser, wobei bei dem Verfahren vorgesehen ist, die Zutaten des Teigs mittels einer Mischvorrichtung nach einem der Ansprüche 1 bis 16 kontinuierlich zu mischen und dann den Teig zu kneten, der aus der Vorrichtung abgeführt wird.

18. Herstellungsverfahren nach Anspruch 17, **dadurch gekennzeichnet, dass** der aus der Mischvorrichtung abgeführte Teig vor seinem Kneten aufgenommen wird.

19. Herstellungsverfahren nach Anspruch 18, **dadurch gekennzeichnet, dass** der aus der Mischvorrichtung abgeführte Teig kontinuierlich geknetet wird.

20. Anlage für die Durchführung des Verfahrens nach Anspruch 19 mit einer Mischvorrichtung nach einem der Ansprüche 1 bis 16 und einem Knetbottich (32), in dem Knetwerkzeuge (33) angeordnet sind und der eine stromaufwärtige Öffnung (34) zur Einspeisung der zu knetenden Mischung, die mit der Abführöffnung (7) in Verbindung steht oder dieser gegenüber angeordnet ist, und eine stromabwärtige Öffnung (35) für den Ausgang des gekneteten Teigs umfasst, wobei der Bottich so angeordnet ist, dass er bei der kontinuierlichen Speisung des Bottichs (32) mit der aus der Mischvorrichtung abgeführten Mischung das Verschieben des Teigs im Bottich (32) von der stromaufwärtigen Öffnung (34) zur stromabwärtigen Öffnung (35) gestattet.

21. Anlage nach Anspruch 20, **dadurch gekennzeichnet, dass** die Speiseöffnung (34) am oberen Teil des Bottichs (32) vorgesehen ist, wobei die Ausgangsöffnung (35) an einer Seitenfläche des Bottichs angeordnet ist.
